# EUROPÄISCHE PATENTANMELDUNG

(11) **EP 0 998 144 A2**
(43) Veröffentlichungstag der Anmeldung: **03.05.2000**
(21) Anmeldenummer: 99119795.5
(22) Anmeldetag: 06.10.1999
(51) Int. Cl.: H04N 7/14

(54) **Tragbarer Computer für Videokonferenzanwendungen**

(30) Priorität: 28.10.1998 DE 19849602
(71) Anmelder: NSM AKTIENGESELLSCHAFT, 55411 Bingen (DE)
(72) Erfinder: Buchholz, Andreas, 55424 Münster-Sarmsheim (DE)
(74) Vertreter: Becker, Bernd, Dipl.-Ing.

(57) **Zusammenfassung**

Ein tragbarer Computer umfaßt ein Gehäuse (1), eine Rechnereinheit zur Datenverarbeitung, mindestens eine Schnittstelle (10, 12, 14, 15, 16, 17) für die Daten- bzw. Datenfernübertragung, einen Lautsprecher (7), eine Energieversorgungseinheit, eine Bedieneinheit (29) zur Eingabe von Daten und einen Bildschirm (2) zur Anzeige von Daten, wobei das Gehäuse (1) eine Befestigungsvorrichtung (20) für ein Kamerastativ (19) aufweist, das eine mit der Rechnereinheit verbundene Kamera (18) trägt. Alternativ ist die Kamera (18) in das Gehäuse (1) integriert. Die Rechnereinheit ist mit einem Mikrofon (6, 13) zur verbalen Kommunikation verbunden. Durch diese Maßnahmen stellt der tragbare Computer eine kompakte Einheit zur ortsveränderlichen Veranstaltung von Videokonferenzen dar.

## Beschreibung

Die Erfindung bezieht sich auf einen tragbaren Computer mit
- einem Gehäuse,
- einer Rechnereinheit zur Datenverarbeitung,
- mindestens einer Schnittstelle für die Daten- bzw. Datenfernübertragung,
- einem Lautsprecher,
- einer Energieversorgungseinheit,
- einer Bedieneinheit zur Eingabe von Daten und
- einem Bildschirm zur Anzeige von Daten.

Zur Veranstaltung von Videokonferenzen werden an einen tragbaren Computer mit üblichem Zubehör, wie z.B. einem Bildschirm, einer Tastatur sowie einem Lautsprecher, eine Kamera und ein Mikrofon angeschlossen. Der Computer wird mittels eines analogen bzw. eines ISDN Modems mit dem Telefonnetz zur Kommunikation mit einem entfernten, entsprechend ausgerüsteten Computer verbunden. Solche Systeme werden meist stationär eingesetzt, da der Transport der einzelnen Komponenten einen erheblichen Arbeitsaufwand verursacht.

Videokonferenzen werden zunehmend in der Kundenbetreuung abgehalten. Um Zeit und damit auch Kosten zu sparen, wird beispielsweise eine Fehlerdiagnose an einer Maschine von einem entfernt niedergelassenen Servicetechniker des Maschinenherstellers mittels Videokonferenz erstellt. Hierzu baut der Maschinenbetreiber einen Computer mit Zubehör, eine Kamera sowie ein Mikrofon im Bereich der defekten Maschine auf, verbindet den Computer sowohl mit dem Telefonnetz als auch mit der Schnittstelle der Maschine und stellt eine Verbindung zu dem Servicetechniker her. Dieser kann aufgrund der von der Maschine bereitgestellten Daten und der Inaugenscheinnahme der Maschine eine Fehlerdiagnose erstellen und den Maschinenbetreiber bei der Reparatur anleiten. Dieses Verfahren ist allerdings sehr aufwendig, da der Maschinenbetreiber mit allen zur Videokonferenz benötigten Geräten um die Maschine herumgehen muß, um dem Servicetechniker die benötigten Bilder mit der Kamera zu liefern.

Es ist Aufgabe der Erfindung, einen tragbaren Computer der eingangs genannten Art zu schaffen, der zur Veranstaltung von mobilen Videokonferenzen leicht handhabbar ist.

Erfindungsgemäß wird die Aufgabe dadurch gelöst, daß das Gehäuse eine Befestigungsvorrichtung für ein Kamerastativ aufweist, das eine mit der Rechnereinheit verbundene Kamera trägt.

Aufgrund dieser Maßnahmen ist ein kompakter, leicht handhabbarer Computer geschaffen, der zur Veranstaltung mobiler Videokonferenzen geeignet ist. Da die Kamera über das Kamerastativ und die Befestigungsvorrichtung mit dem Gehäuse verbunden ist, entfällt der separate Transport derselben bei einem Standortwechsel des tragbaren Computers. Im weiteren ist die Kamera zur Videokonferenz zwingend notwendig, um entsprechende Bilddaten mit dem oder den Videokonferenzpartnern austauschen zu können.

Alternativ wird die Aufgabe dadurch gelöst, daß eine mit der Rechnereinheit verbundene Kamera in das Gehäuse integriert ist.

Diese Lösung ermöglicht ein leichtes Handling. Der kompakt aufgebaute Computer vereinigt alle, zur Veranstaltung von Videokonferenzen, benötigten Baugruppen in einem Gehäuse und ist somit leicht zu transportieren.

Nach einer vorteilhaften Ausgestaltung der Erfindung ist die Befestigungsvorrichtung für das Kamerastativ als Bajonettverschluß, Schraubverbindung, Klipsverbindung oder dergleichen ausgebildet. Aufgrund dieser Ausgestaltung kann das Kamerastativ zur platzsparenden Lagerung des Gehäuses mit einem geringen Aufwand demontiert werden.

Bevorzugt ist die Bedieneinheit der als Touchscreen ausgebildete Bildschirm. Die Dateneingabe mittels des als Touchscreen ausgebildeten Bildschirmes ist im Gegensatz zu einer Tastatur relativ einfach und überschaubar. Ferner läßt sich die Dateneingabe, insbesondere von einem Bediener, der keine oder nur wenig Übung im Umgang mit einer Tastatur hat, schneller vollziehen, so daß eine Online-Zeit verkürzt wird.

Zweckmäßigerweise ist die Rechnereinheit mit einem Mikrofon zur verbalen Kommunikation verbunden. Der Bediener hat somit die Möglichkeit Sprachdaten für die Videokonferenz einzugeben.

Nach einer vorteilhaften Weiterbildung des Erfindungsgedankens ist das Mikrofon in das Gehäuse integriert oder Bestandteil einer Kopfhörer-Mikrofon-Kombination. Im Falle der Integration des Mikrofons in das Gehäuse entfällt dessen separater Transport bei einem Ortswechsel der Videokonferenz. Die Kopfhörer-Mikrofon-Kombination erlaubt dem Teilnehmer der Videokonferenz eine größere Bewegungsfreiheit bei gleichbleibend guter Übertragung der Sprachdaten, insbesondere in einer lauten Umgebung.

Zweckmäßigerweise ist das Mikrofon mittels einer Soundkarte, die entsprechende Anschlußbuchsen für das Mikrofon und den Kopfhörer zur Verfügung stellt, mit der Rechnereinheit gekoppelt. Die handelsübliche Soundkarte ist in das Gehäuse integriert, wodurch dessen Mobilität nicht beeinträchtigt wird.

Die Verbindung mehrerer Computer zur Veranstaltung einer Videokonferenz, bei der stets eine Übertragung von Daten stattfindet, ist über das Telefonnetz oder über das Internet möglich. Zur Ausnutzung dieser Möglichkeiten ist vorteilhafterweise zur Datenfernübertragung ein Analog- bzw. ein ISDN-Modem vorgesehen, das über ein Kabel oder eine Funkeinrichtung mit einem entsprechenden Telefonanschluß kommuniziert. Die Funkeinrichtung gewährt dem Videokonferenzteilnehmer eine größere Bewegungsfreiheit mitsamt dem tragbaren Computer, da keine störenden Kabel vorhanden sind. Allerdings ist in speziellen Räumlichkeiten, wie z.B. in explosionsgefährdeten Bereichen der chemischen Industrie, die Verwendung einer Funkeinrichtung oftmals nicht gestattet, weshalb die Verbindung des Analog- bzw. ISDN-Modems über ein Kabel mit dem entsprechenden Telefonanschluß besondere Anwendungsmöglichkeiten des tragbaren Computers eröffnet. Bevorzugt ist das Modem in das Gehäuse integriert.

Nach einer Weiterbildung der Erfindung ist die Bedieneinheit als alphanumerische oder numerische Tastatur ausgebildet. Der Funktionsumfang der Tastatur, zur Eingabe individueller Daten ist von dem Funktionsumfang des Touchscreens abhängig und wird zu diesem ergänzend zur Verfügung gestellt.

Zweckmäßigerweise sind als Bedieneinheit sowohl der als Touchscreen ausgebildete Bildschirm als auch die Tastatur vorgesehen. Die Anordnung der beiden Bedieneinheiten ermöglicht die relativ einfache Eingabe definierter Daten mittels des Touchscreens und die Eingabe individueller Daten über die Tastatur.

Der tragbare Computer soll auch Videokonferenzen in relativ schmutziger Umgebung, wie Maschinenhallen, ermöglichen ohne dabei beschädigt zu werden, deshalb ist vorzugsweise die Tastatur eine spritzwassergeschützte Folientastatur. Ferner ist bevorzugt das Gehäuse spritzwassergeschützt ausgeführt.

Zweckmäßigerweise ist die Energieversorgungseinheit ein Netzteil bzw. ein Akkumulator. Während das Netzteil eine zeitlich nahezu unbegrenzte Energieversorgung des tragbaren Computers sicherstellt, erlaubt der Akkumulator eine netzunabhängige Bewegungsfreiheit ohne einschränkende Kabelführung.

Um entsprechende Datenmengen für die Videokonferenz bereitstellen zu können, ist vorteilhafterweise zur permanenten Speicherung der Daten eine Festplatte, ein Diskettenlaufwerk, ein optisches Laufwerk und/oder ein Bandlaufwerk mit der Rechnereinheit verbunden. Bevorzugt ist die Festplatte, das Diskettenlaufwerk, das optische Laufwerk und/oder das Bandlaufwerk in das Gehäuse integriert. Somit ist ein einfacher Transport des Gehäuses mitsamt den genannten Bauteilen sichergestellt.

Es versteht sich, daß die vorstehend genannten und nachstehend noch zu erläuternden Merkmale nicht nur in der jeweils angegebenen Kombination, sondern auch in anderen Kombinationen verwendbar sind, ohne den Rahmen der vorliegenden Erfindung zu verlassen.

Die Erfindung wird im folgenden anhand von Ausführungsbeispielen unter Bezugnahme auf die zugehörigen Zeichnungen näher erläutert. Es zeigen:

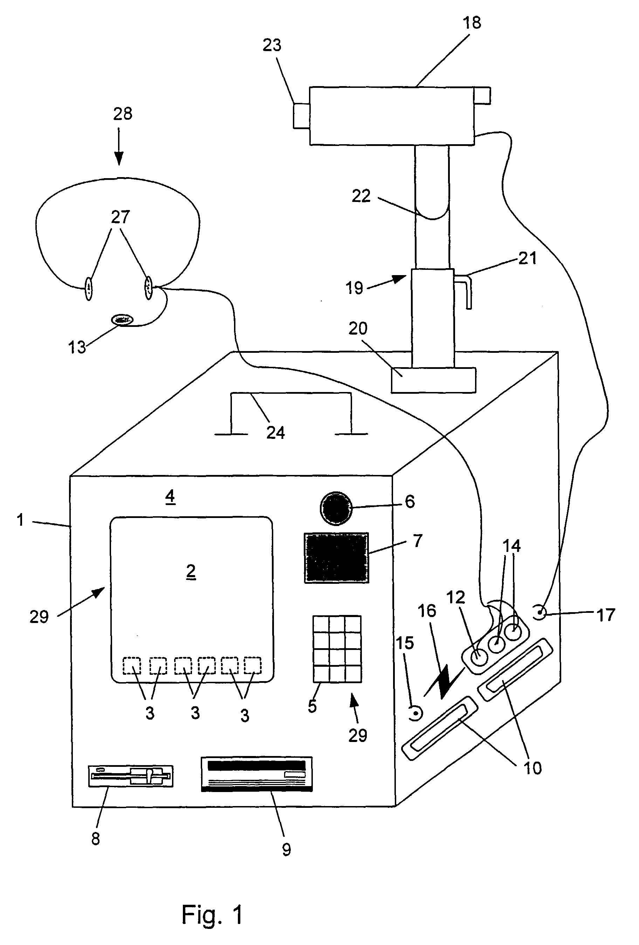

- **Fig.1**: eine Darstellung eines erfindungsgemäßen tragbaren Computers nach einer ersten Ausführungsform,

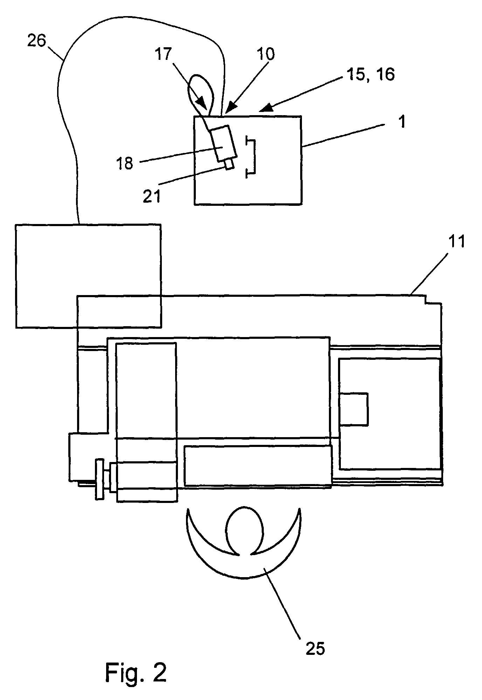

- **Fig.2**: eine Darstellung einer Videokonferenz-Situation unter Verwendung des Computers nach Fig. 1 und

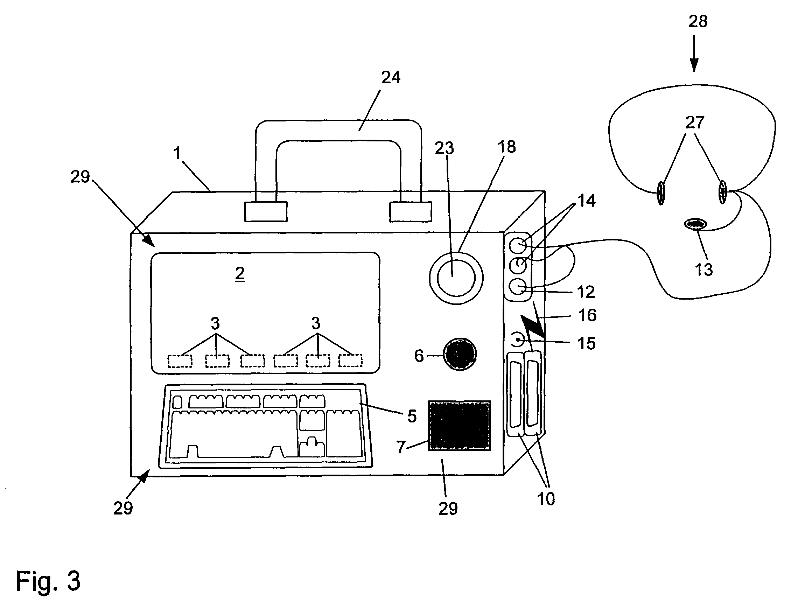

- **Fig.3**: eine Darstellung eines erfindungsgemäßen tragbaren Computers nach einer zweiten Ausführungsform.

Ein tragbarer Computer nach einer ersten Ausführungsform umfaßt ein Gehäuse 1 mit einem als Touchscreen ausgebildeten Bildschirm 2 als Bedieneinheit 29, mit dem vordefinierte Befehle auf vorbestimmten Feldern 3 ausgewählt werden können. Das aus Kunststoff oder Blech gefertigte Gehäuse 1 ist spritzwasser- und staubgeschützt ausgeführt und nimmt in einer Frontplatte 4 neben dem Bildschirm 2 eine Tastatur 5 als weitere Bedieneinheit 29 sowie ein internes Mikrofon 6 zur Eingabe von Daten auf. Neben dem Mikrofon 6 ist auch ein Lautsprecher 7 in die Frontplatte 4 zur Ausgabe entsprechender Daten integriert. Zur permanenten Speicherung von Daten ist innerhalb des Gehäuses 1 eine Festplatte vorgesehen. Ein Diskettenlaufwerk 8 sowie ein optisches Laufwerk 9 sind in der Frontplatte 4 des Gehäuses 1 installiert, wobei diese Geräte mit einer Rechnereinheit innerhalb des Gehäuses 1 verbunden sind. Ferner weist das Gehäuse 1 zwei Schnittstellen 10 auf, von denen die eine zur Kommunikation mit einer Maschine 11 verbunden wird und die andere zum Anschluß weiterer Peripheriegeräte dient.

Die Rechnereinheit ist mit einer internen Soundkarte verbunden, die eine Anschlußbuchse 12 für ein externes Mikrofon 13 und zwei Anschlußbuchsen 14 für einen Kopfhörer 27 zur Verfügung stellt. Das Mikrofon 13 und der Kopfhörer 27 bilden eine Kopfhörer-Mikrofon-Kombination 28. An die Rechnereinheit ist im weiteren ein Modem mit einer Telefonbuchse 15 und mit einer Funkeinrichtung 16 angeschlossen, das eine Datenfernübertragung zu einem dem tragbaren Computer entfernt plazierten, weiteren Computer über einen Telefonanschluß ermöglicht. Die Verarbeitung von Bilddaten ist mittels einer Video-Schnitt-stelle 17 realisiert, die einerseits mit der Rechnereinheit und andererseits mit einer Kamera 18 in Verbindung steht.

Die Kamera 18 ist über ein teleskopartiges Kamerastativ 19 mittels einer Befestigungsvorrichtung 20 an dem Gehäuse 1 festgelegt. Das Kamerastativ 19 ist nach dem Lösen einer Klemmeinrichtung 21 höhenverstellbar sowie verdrehbar und über ein Gelenk 22 schwenkbar, so daß ein Objektiv 23 der Kamera 18 nahezu beliebig ausgerichtet werden kann, ohne das Gehäuse 1 zu bewegen.

Zum Transport des Gehäuses 1 ist an dessen Oberseite ein klappbarer Griff 24 angeordnet.

Soll eine Videokonferenz zum Zweck einer Reparatur bzw. einer Fehlerdiagnose der Maschine 11 durchgeführt werden, dann plaziert der Maschinenbetreiber 25 den tragbaren Computer im Bereich der Maschine 11. Über eine der Schnittstellen 10 stellt er mittels einer Datenleitung 26 eine Verbindung zur Maschine 11 her und wählt über eine der Bedieneinheiten 29 einen entfernten Servicetechniker an. Per Datenfernübertragung hat der Servicetechniker Zugang zu den relevanten Maschinendaten und der Maschinenbetreiber 25 kann mit dem Servicetechniker kommunizieren. Ist es notwendig, daß der Servicetechniker die Maschine in Augenschein nimmt, positioniert der Maschinenbetreiber 25 den tragbaren Computer an der erforderlichen Stelle und nimmt mit Hilfe des beweglichen Kamerastatives 19 eine Feinjustierung der Kamera 18 vor. Aufgrund des visuellen Kontaktes ist eine Anreise des Servicetechnikers zu der defekten Maschine oft nicht nötig, da der Servicetechniker auch Hilfestellung zur Reparatur geben kann, die auf dem Bildschirm 2 dargestellt wird.

In das Gehäuse 1 eines tragbaren Computers nach einer zweiten Ausführungsform ist neben einem als Touchscreen ausgebildeten Bildschirm 2 als Bedieneinheit 29 die Tastatur 30 integriert, die alphanumerisch ausgeführt ist. In der Frontplatte 4 des Gehäuses 1 sind im weiteren das Mikrofon 6 sowie der Lautsprecher 7 integriert, die eine verbale Kommunikation während der Videokonferenz ermöglichen. Die visuelle Informationsübermittlung ist mittels der in das Gehäuse 1 installierten Kamera 18 realisiert, wobei die Kamera 18 selbstverständlich in einem beliebigen Teil des Gehäuses 1 plaziert sein kann.

Zur Datenfernübertragung sind wiederum ein Modem sowie Telefonbuchse 15 bzw. Funkeinrichtung 16 vorgesehen. Daneben verfügt der Computer über entsprechende Schnittstellen 10 zur Kommunikation mit anderen Schnittstellen, beispielsweise Maschinenschnittstellen und über Anschlußbuchsen 12, 14 für das Mikrofon 13 und den Kopfhörer 27 der Kopfhörer-Mikrofon-Kombination 28.

Das Griffstück 24, das ein gutes Handling des tragbaren Computers ermöglicht, ist an dem Gehäuse 1 befestigt.

## Patentansprüche

1. Tragbarer Computer mit
- einem Gehäuse (1),
- einer Rechnereinheit zur Datenverarbeitung,
- mindestens einer Schnittstelle (10, 12, 14, 15, 16, 17) für die Daten- bzw. Datenfernübertragung,
- einem Lautsprecher (7),
- einer Energieversorgungseinheit,
- einer Bedieneinheit (29) zur Eingabe von Daten und
- einem Bildschirm (2) zur Anzeige von Daten,
**dadurch gekennzeichnet,** daß das Gehäuse (1) eine Befestigungsvorrichtung (20) für ein Kamerastativ (19) aufweist, das eine mit der Rechnereinheit verbundene Kamera (18) trägt.

2. Tragbarer Computer nach dem Oberbegriff des Anspruchs 1, **dadurch gekennzeichnet,** daß eine mit der Rechnereinheit verbundene Kamera (18) in das Gehäuse (1) integriert ist.

3. Tragbarer Computer nach Anspruch 1, **dadurch gekennzeichnet,** daß die Befestigungsvorrichtung (20) für das Kamerastativ (19) als Bajonettverschluß, Schraubverbindung, Klipsverbindung oder dergleichen ausgebildet ist.

4. Tragbarer Computer nach den Ansprüchen 1 und 2, **dadurch gekennzeichnet,** daß die Bedieneinheit (29) der als Touchscreen ausgebildete Bildschirm (2) ist.

5. Tragbarer Computer nach den Ansprüchen 1 und 2, **dadurch gekennzeichnet,** daß die Rechnereinheit mit einem Mikrofon (6, 13) zur verbalen Kommunikation verbunden ist.

6. Tragbarer Computer nach Anspruch 5, **dadurch gekennzeichnet,** daß das Mikrofon (6) in das Gehäuse integriert oder Bestandteil einer Kopfhörer-Mikrofon-Kombination (28) ist.

7. Tragbarer Computer nach den Ansprüchen 5 und 6, **dadurch gekennzeichnet,** daß das Mikrofon (13) mittels einer Soundkarte, die entsprechende Anschlußbuchsen (12, 14) für das Mikrofon (13) und den Kopfhörer (27) zur Verfügung stellt, mit der Rechnereinheit gekoppelt ist.

8. Tragbarer Computer nach den Ansprüchen 1 und 2, **dadurch gekennzeichnet,** daß zur Datenfernübertragung ein analog bzw. ein ISDN Modem vorgesehen ist, das über ein Kabel oder eine Funkeinrichtung (16) mit einem entsprechenden Telefonanschluß kommuniziert.

9. Tragbarer Computer nach Anspruch 8, **dadurch gekennzeichnet,** daß das Modem in das Gehäuse (1) integriert ist.

10. Tragbarer Computer nach den Ansprüchen 1 und 2, **dadurch gekennzeichnet,** daß die Bedieneinheit (29) als alphanumerische oder numerische Tastatur (5) ausgebildet ist.

11. Tragbarer Computer nach einem der Ansprüche 1 bis 10, **dadurch gekennzeichnet,** daß als Bedieneinheit (29) sowohl der als Touchscreen ausgebildete Bildschirm (2) als auch die Tastatur (5) vorgesehen sind.

12. Tragbarer Computer nach den Ansprüchen 10 und 11, **dadurch gekennzeichnet,** daß die Tastatur (5) eine spritzwassergeschützte Folientastatur ist.

13. Tragbarer Computer nach einem der Ansprüche 1 bis 12, **dadurch gekennzeichnet,** daß das Gehäuse (1) spritzwassergeschützt ausgeführt ist.

14. Tragbarer Computer nach den Ansprüchen 1 und 2, **dadurch gekennzeichnet,** daß die Energieversorgungseinheit ein Netzteil bzw. ein Akkumulator ist.

15. Tragbarer Computer nach einem der Ansprüche 1 bis 14, **dadurch gekennzeichnet,** daß zur permanenten Speicherung der Daten eine Festplatte, ein Diskettenlaufwerk (8), ein optisches Laufwerk (9) und/oder ein Bandlaufwerk mit der Rechnereinheit verbunden ist.

16. Tragbarer Computer nach Anspruch 15, **dadurch gekennzeichnet,** daß die Festplatte, das Diskettenlaufwerk (8), das optische Laufwerk (9) und/oder das Bandlaufwerk in das Gehäuse (1) integriert ist.
